# EUROPÄISCHE PATENTANMELDUNG

(11) **EP 2 112 035 A1**
(43) Veröffentlichungstag der Anmeldung: **28.10.2009**
(21) Anmeldenummer: 09005491.7
(22) Anmeldetag: 17.04.2009
(51) Int. Cl.: B60R 25/00, G05B 19/042, G06F 9/445, G07C 9/00

(54) **Verfahren zur Erweiterung von Software für ein Steuergerät eines Fahrzeugs und entsprechend ausgestaltete Datenlesevorrichtung sowie Schlüssel und Fahrzeug**

(30) Priorität: 24.04.2008 DE 102008020560
(71) Anmelder: Volkswagen Aktiengesellschaft, 38436 Wolfsburg (DE)
(72) Erfinder: Goß, Stefan, 31137 Hildesheim (DE)
(74) Vertreter: Banzer, Hans-Jörg

(57) **Zusammenfassung**

Eine Erweiterung von Software für mindestens ein Steuergerät (2, 3) eines Fahrzeugs (10) wird mittels eines dem Fahrzeug (10) zugeordneten Schlüssels (1) durchgeführt. Dabei werden zur Erweiterung der Software benötigte Daten (6), beispielsweise ein Freischaltcode, von dem Schlüssel (1) an das mindestens eine Steuergerät (2, 3) übertragen.

## Beschreibung

Die vorliegende Erfindung betrifft ein Verfahren, um Software für ein oder für mehrere Steuergeräte eines Fahrzeugs zu erweitern und eine entsprechend ausgestaltete Datenlesevorrichtung, mittels welcher die Software für das oder die Steuergeräte erweitert wird. Darüber hinaus betrifft die vorliegende Erfindung ein entsprechend ausgestaltetes Fahrzeug sowie einen dem Fahrzeug zugeordneten Schlüssel, mit dessen Hilfe die Erweiterung der Software durchgeführt wird.

Wenn heutzutage die Software eines Steuergeräts eines Fahrzeugs erweitert werden soll, erfolgt eine Freischaltung der neuen Software mittels eines Freischaltcodes, welcher manuell beispielsweise in ein Bordcomputersteuergerät des Fahrzeugs eingegeben werden muss. Diese Eingabe des Freischaltcodes ist ein umständlicher Vorgang, da das Bordcomputersteuergerät erst in einen Modus geschaltet werden muss, in welchem es den Freischaltcode entgegennimmt. Darüber hinaus muss in den meisten Fällen, wiederum mit komplizierten Bedienabläufen des Bordcomputersteuergeräts, diejenige neue Software bestimmt werden, welche durch den Freischaltcode frei zu schalten ist. Wenn sich die frei zu schaltende Software noch nicht im Steuergerät befindet, muss die Software erst noch eingespielt werden, was weitere komplizierte manuelle Vorgänge erforderlich macht und die Erweiterung der Software für das Steuergerät weiter verkompliziert.

Daher ist es die Aufgabe der vorliegenden Erfindung, eine Erweiterung von Software für ein Steuergerät eines Fahrzeugs gegenüber dem Stand der Technik zu vereinfachen.

Erfindungsgemäß wird diese Aufgabe durch ein Verfahren zur Erweiterung von Software für mindestens ein Steuergerät eines Fahrzeugs nach Anspruch 1, durch eine Datenlesevorrichtung für ein Fahrzeug nach Anspruch 9, durch ein Fahrzeug nach Anspruch 11 und durch einen Schlüssel nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zur Erweiterung von Software für ein oder für mehrere Steuergeräte eines Fahrzeugs bereitgestellt. Dabei wird die Erweiterung mittels eines dem Fahrzeug zugeordneten Schlüssels durchgeführt, indem zur Erweiterung der Software benötigte Daten von dem Schlüssel an das eine Steuergerät oder die mehreren Steuergeräte übertragen werden. Unter dem dem Fahrzeug zugeordneten Schlüssel wird dabei insbesondere ein Schlüssel verstanden, mit welchem das Fahrzeug entriegelt und gestartet werden kann.

Indem die zur Erweiterung der Software benötigten Daten mittels des Schlüssels an das mindestens eine Steuergerät übertragen werden, entfällt die nach dem Stand der Technik übliche manuelle komplizierte Eingabe eines Freischaltcodes. Da die Übertragung der zur Erweiterung der Software benötigten Daten insbesondere dann stattfindet, wenn der Schlüssel normal zum Fahren des Fahrzeugs verwendet wird, erfordert die Übertragung der zur Erweiterung der Software benötigten Daten von dem Schlüssel an das mindestens eine Steuergerät keinerlei besondere manuelle Handhabung seitens des Fahrers des Fahrzeugs, um die Software des mindestens einen Steuergeräts in der gewünschten Weise zu erweitern. Darüber hinaus spart das erfindungsgemäße Verfahren beim Verkauf und bei der Erweiterung der Software im Vergleich zum Stand der Technik auch Zeit sowohl beim Verkäufer als auch beim Kunden ein und steigert somit die Bedienungsfreundlichkeit. Damit sind durch das erfindungsgemäße Verfahren beispielsweise in bereits verkauften Fahrzeugen Softwarefunktionen auf einfache Art und Weise nachrüstbar.

Die zur Erweiterung der Software von dem Schlüssel an das mindestens eine Steuergerät übertragenen Daten enthalten dabei insbesondere einen Freischaltcode, mit welchem ein noch nicht frei geschaltetes Softwaremodul des mindestens einen Steuergeräts freigeschaltet wird.

Da die zur Erweiterung der Software übertragenen Daten den Freischaltcode umfassen, weist das erfindungsgemäße Verfahren zur Erweiterung von Software zumindest den nach dem Stand der Technik üblichen Sicherheitsstandard hinsichtlich einer Verhinderung der Installation von Raubkopien der erwünschten Software auf.

Bei einer bevorzugten Ausführungsform der vorliegenden Erfindung wird dabei der Freischaltcode abhängig von einer das Fahrzeug eindeutig identifizierenden Kennzeichnung, beispielsweise der Fahrgestellnummer oder VIN ("Vehicle Identification Number"), gebildet. Die Software kann dann nur freigeschaltet werden, wenn der Freischaltcode in dem entsprechenden Fahrzeug (mit der entsprechenden VIN) verwendet wird.

Indem der Freischaltcode abhängig von der VIN gebildet wird, erwirbt der Kunde eine oder mehrere Softwarefunktionen für ein bestimmtes Fahrzeug, was einen verbotenen Einsatz der Software bei anderen Fahrzeugen zumindest erschwert. Anders ausgedrückt sollte weder das Freischalten noch die Erweiterung der Software möglich sein, wenn der Erwerb nicht ordnungsgemäß erfolgt ist.

Dazu wird zum Beispiel mittels eines Trustcenters des Herstellers der Software (OEM) eine von der das Fahrzeug eindeutig identifizierenden Kennzeichnung abhängige Signatur erstellt, mit welcher der Freischaltcode versehen wird. Der Erstellungsvorgang des Freischaltcodes oder der Signaturvorgang erfolgt dabei in der Regel ohne spürbare Verzögerung für den Kunden, wenn die Verkäufer bzw. die Werkstatt eine Online-Verbindung zu dem Trustcenter besitzt.

Darüber hinaus ist es möglich, dass in dem Schlüssel Fahrzeuginformationen gespeichert sind, welche zu bestimmten Zeitpunkten von dem Fahrzeug in den Schlüssel geschrieben werden. Diese Fahrzeuginformationen umfassen zum Beispiel:
- einen aktuellen Kilometerstand des Fahrzeugs,
- Wartung-Informationen, wie z.B. Fehlermeldungen,
- einen Zeitpunkt, zu welchem die Fahrzeuginformationen in dem Schlüssel abgespeichert wurden.

Die zur Erweiterung der Software benötigten Daten werden dabei insbesondere mittels einer von dem Fahrzeug unabhängigen Schreibvorrichtung in den Schlüssel geschrieben bzw. gespeichert.

Wenn diese Schreibvorrichtung beispielsweise in einer Werkstatt vorhanden ist, können die zur Erweiterung der Software benötigten Daten während eines Werkstattaufenthalts des Fahrzeugs, wobei in der Regel der Schlüssel in der Werkstatt abgegeben wird, problemlos mittels dieser Schreibvorrichtung in den Schlüssel übertragen werden.

Wenn es die in dem Schlüssel vorhandene Speicherkapazität zulässt, ist es auch denkbar, dass die in dem Schlüssel gespeicherten Daten ein Softwaremodul umfassen, welches von dem Schlüssel an das mindestens eine Steuergerät übertragen wird, um auf diesem Wege die Software des mindestens einen Steuergeräts zu erweitern.

Dadurch ist es möglich, dass durch das erfindungsgemäße Verfahren nicht nur Software freigeschaltet wird, welche sich bereits auf dem mindestens einen Steuergerät befindet, sondern dass mittels des erfindungsgemäßen Verfahrens auch neue Softwarepakete in dem mindestens einen Steuergerät installiert und freigeschaltet werden. In dem zweiten Fall würde die vom Kunden gekaufte Software beispielsweise in der Werkstatt auf den Schlüssel gespeichert und im Fahrzeug vom Schlüssel auf die entsprechenden Steuergeräte übertragen.

Die Übertragung der Daten von dem Schlüssel an das mindestens eine Steuergerät erfolgt dabei insbesondere über eine drahtlose Funkschnittstelle des Fahrzeugs, wenn der Schlüssel Teil eines Keyless-Entry-Systems des Fahrzeugs ist, oder über eine Transponderschnittstelle des Fahrzeugs, wenn der Schlüssel zum Starten des Fahrzeugs in ein Zündschloss des Fahrzeugs gesteckt wird.

Da die drahtlose Funkschnittstelle oder die Transponderschnittstelle bereits aus anderen Gründen in dem Fahrzeug vorhanden ist, damit nämlich das Fahrzeug über die entsprechende Schnittstelle den Schlüssel als den diesem Fahrzeug zugeordnete Schlüssel erfasst, werden vorteilhafterweise für die vorliegende Erfindung keine zusätzlichen Vorrichtungen innerhalb des Fahrzeugs benötigt.

Im Rahmen der vorliegenden Erfindung wird auch eine Datenlesevorrichtung für ein Fahrzeug bereitgestellt. Dabei umfasst die Datenlesevorrichtung eine Leseschnittstelle und ist derart ausgestaltet, dass sie die Daten, welche in dem dem Fahrzeug zugeordneten Schlüssel gespeichert sind, mittels dieser Leseschnittstelle ausliest. Darüber hinaus ist die Datenlesevorrichtung derart ausgestaltet, dass sie eine Software von einem oder von mehreren Steuergeräten des Fahrzeugs dadurch erweitert, dass sie die von dem Schlüssel ausgelesenen Daten an das oder die Steuergeräte überträgt.

Die Vorteile der erfindungsgemäßen Datenlesevorrichtung entsprechen dabei im Wesentlichen den Vorteilen des erfindungsgemäßen Verfahrens, welche vorab im Detail erläutert wurden, weshalb hier auf eine Wiederholung verzichtet wird.

Darüber hinaus offenbart die vorliegende Erfindung ein Fahrzeug mit einer solchen Datenlesevorrichtung.

Schließlich stellt die vorliegende Erfindung einen Schlüssel für ein Fahrzeug bereit. Dabei umfasst dieser Schlüssel einen Datenspeicher und eine Sendereinheit, um Daten, welche in seinem Datenspeicher gespeichert sind, an die vorab beschriebene Datenlesevorrichtung zu übertragen.

Die vorliegende Erfindung ist insbesondere geeignet, um Software für ein Steuergerät eines Fahrzeugs in einer für den Benutzer des Fahrzeugs äußerst bequemen Weise zu erweitern. Selbstverständlich ist die vorliegende Erfindung nicht auf diesen bevorzugten Anwendungsbereich beschränkt, sondern kann beispielsweise auch eingesetzt werden, um Software für ein Steuergerät eines Flugzeugs, eines Schiffes oder eines gleisgebundenen Fahrzeugs zu erweitern.

Im Folgenden wird die vorliegende Erfindung anhand bevorzugter Ausführungsformen mit Bezug auf die Zeichnung erläutert.

In Fig. 1 ist schematisch dargestellt, wie Daten in einen erfindungsgemäßen Schlüssel geschrieben werden.

In Fig. 2 ist schematisch ein erfindungsgemäßer Schlüssel dargestellt, welcher mit einer erfindungsgemäßen Datenlesevorrichtung eines erfindungsgemäßen Fahrzeugs in einer Kommunikationsverbindung steht.

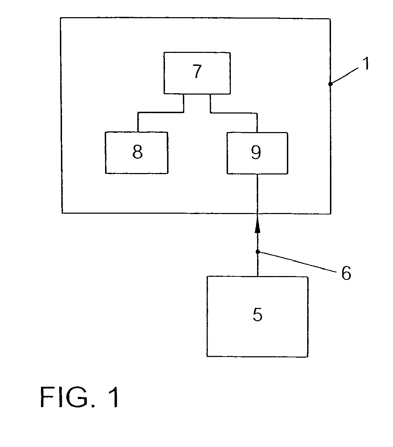

In Fig. 1 ist schematisch ein erfindungsgemäßer Schlüssel 1 dargestellt, welcher mit einer Schreibvorrichtung 5 gekoppelt ist. Dabei umfasst der Schlüssel 1 eine Leseeinheit 9 und einen damit gekoppelten Datenspeicher 7, um über die Leseeinheit 9 gelesene Daten in dem Datenspeicher 7 abzuspeichern. Darüber hinaus umfasst der Schlüssel 1 eine Sendeeinheit bzw. Schreibeinheit 8, mit welcher der Schlüssel 1 die in dem Datenspeicher 7 gespeicherten Daten aussenden bzw. ausschreiben kann.

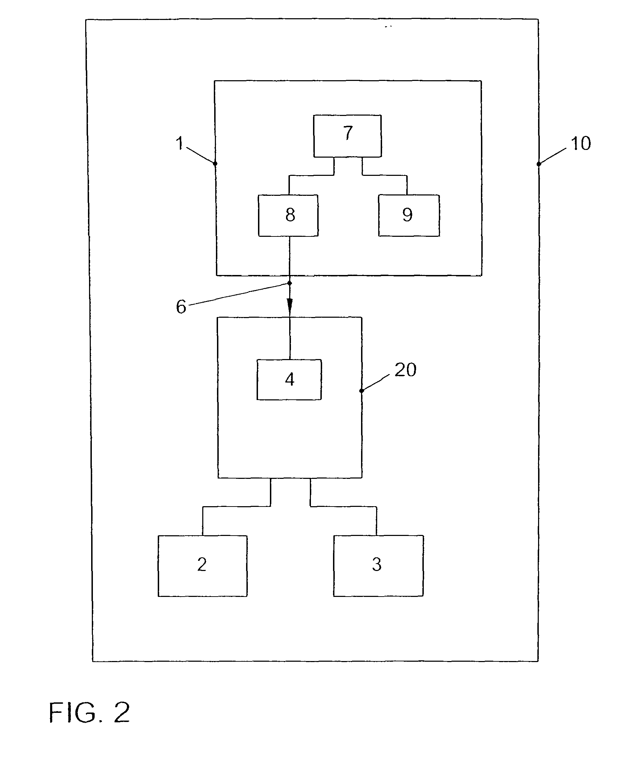

Die Schreibvorrichtung 5, welche sich beispielsweise in einer Werkstatt befindet, schreibt Daten 6, welche zur Erweiterung einer Software mindestens eines Steuergeräts eines Fahrzeugs (siehe Fig. 2) erforderlich sind, in den mit der Schreibvorrichtung 5 gekoppelten Schlüssel 1, besser in den Datenspeicher 7 dieses Schlüssels 1.

Fig. 2 stellt schematisch ein erfindungsgemäßes Kraftfahrzeug 10 mit einem erfindungsgemäßen Schlüssel 1 dar. Dabei umfasst das erfindungsgemäße Fahrzeug 10 eine Datenlesevorrichtung 20, welche mit dem Schlüssel 1 in einer Kommunikationsverbindung 6 steht und zwei Steuergeräte 2, 3, welche wiederum mit der Datenlesevorrichtung 20 verbunden sind. Über den Schlüssel 1 werden Daten 6, insbesondere ein Freischaltcode, zur Erweiterung der Software der Steuergeräte 2, 3 an die Datenlesevorrichtung 20 übertragen, welche diese Daten 6 an ihrer Leseschnittstelle 4 empfängt und dann an die Steuergeräte 2 und 3 weiterleitet. Die Leseschnittstelle 4 ist dabei eine Transponderschnittstelle oder ein Funkempfänger, wenn es sich bei dem Schlüssel 1 um einen Schlüssel für ein Keyless-Entry-System des Fahrzeugs handelt.

Obwohl dieser Fall nicht explizit in Fig. 2 dargestellt ist, können auch Fahrzeugdaten vom Fahrzeug 10 in dem Datenspeicher 7 des Schlüssels 1 abgespeichert werden.

Erfindungsgemäß ist nun folgender Anwendungsfall möglich. Ein Fahrzeugbesitzer fährt, beispielsweise um sein Fahrzeug reparieren oder warten zu lassen, in eine Werkstatt und überreicht dort seinen Schlüssel 1 einem Mechaniker. Dieser Mechaniker legt den Schlüssel 1 in eine Lesestation (nicht dargestellt) und liest die Fahrzeugdaten, welche beispielsweise auch die VIN (Fahrgestellnummer) umfassen, aus. Das Fahrzeug 10 wird instandgesetzt oder gewartet. Der Fahrzeugbesitzer, welcher später sein Fahrzeug 10 abholt, entschließt sich zum Kauf einer oder mehrerer Softwarefunktionen für die Steuergeräte 2, 3 seines Fahrzeugs 10. (Eine solche Softwarefunktion kann zum Beispiel für den Fall, dass es sich bei dem Fahrzeug 10 um ein Hybridfahrzeug handelt, einen Energiefluss in dem Hybridfahrzeug darstellen.) Daraufhin ermittelt ein Verkäufer in der Werkstatt mit Hilfe eines Trustcenters des Herstellers der Softwarefunktionen und abhängig von der VIN einen oder mehrere Freischaltcodes für die gewünschten Softwarefunktionen und überspielt diesen oder diese Freischaltcodes mit Hilfe der Schreibvorrichtung 5 in den Schlüssel 1. Anschließend wird der Schlüssel 1 an den Fahrzeugbesitzer übergeben, welcher mit dem Schlüssel 1 ganz normal sein Fahrzeug 10 öffnet und startet. Über die Leseschnittstelle 4 werden dabei die Freischaltcodes der Softwarefunktionen von dem Datenspeicher 7 über die Sendeeinheit 8 an die Leseschnittstelle 4 und von dort zu den Steuergeräten 2, 3 übertragen, wo eine Freischaltung der Softwarefunktionen erfolgt.

Es ist dabei auch möglich, dass beispielsweise ein Kombiinstrument oder ein Infotainmentinstrument des Fahrzeugs (beide nicht dargestellt) vorher eine Bestätigung von dem Fahrzeugbesitzer erfragt und die Softwarefunktionen nur freigeschaltet werden, wenn der Fahrzeugbesitzer diese Bestätigungsanfrage durch eine entsprechende Eingabe in das Kombiinstrument oder Infotainmentinstrument bejaht.

### BEZUGSZEICHENLISTE

- 1: Schlüssel
- 2,3: Steuergerät
- 4: Leseschnittstelle
- 5: Schreibvorrichtung
- 6: Daten
- 7: Datenspeicher
- 8: Sendeeinheit
- 9: Leseeinheit
- 10: Fahrzeug
- 20: Datenlesevorrichtung

## Patentansprüche

1. Verfahren zur Erweiterung von Software für mindestens ein Steuergerät eines Fahrzeugs,
**dadurch gekennzeichnet,**
**dass** die Erweiterung mittels eines dem Fahrzeug (10) zugeordneten Schlüssels (1) durchgeführt wird, indem zur Erweiterung der Software benötigte Daten (6) von dem Schlüssel (1) an das mindestens eine Steuergerät (2, 3) übertragen werden.

2. Verfahren nach Anspruch 1, **dadurch gekennzeichnet, dass** die Daten (6) einen Freischaltcode umfassen, und dass mit dem Freischaltcode ein noch nicht frei geschaltetes Softwaremodul des mindestens einen Steuergeräts (2, 3) frei geschaltet wird.

3. Verfahren nach Anspruch 2, **dadurch gekennzeichnet, dass** der Freischaltcode abhängig von einer das Fahrzeug (10) eindeutig identifizierenden Kennzeichnung gebildet wird.

4. Verfahren nach einem der vorhergehenden Ansprüche, **dadurch gekennzeichnet, dass** die Daten (6) mittels einer von dem Fahrzeug (10) unabhängigen Schreibvorrichtung (5) in den Schlüssel (1) gespeichert werden.

5. Verfahren nach einem der vorhergehenden Ansprüche, **dadurch gekennzeichnet, dass** in dem Schlüssel (1) darüber hinaus Fahrzeuginformationen gespeichert werden.

6. Verfahren nach einem der vorhergehenden Ansprüche, **dadurch gekennzeichnet, dass** ein Softwaremodul von dem Schlüssel (1) an das mindestens eine Steuergerät (2, 3) übertragen wird, um die Software des mindestens einen Steuergeräts (2, 3) zu erweitern.

7. Verfahren nach einem der vorhergehenden Ansprüche, **dadurch gekennzeichnet, dass** die Daten (6) über eine Transponderschnittstelle des Fahrzeugs (10) oder über eine drahtlose Funkschnittstelle des Fahrzeugs (10) von dem Schlüssel an das mindestens eine Steuergerät (2, 3) übertragen werden.

8. Verfahren nach einem der vorhergehenden Ansprüche, **dadurch gekennzeichnet, dass** über ein Kombiinstrument oder ein Infotainmentinstrument des Fahrzeugs (10) vorher eine Bestätigung erfragt wird, und dass die Erweiterung der Software nur durchgeführt wird, wenn die Bestätigungsanfrage durch eine entsprechende Eingabe in das Kombiinstrument oder Infotainmentinstrument bejaht wird.

9. Datenlesevorrichtung für ein Fahrzeug,
wobei die Datenlesevorrichtung (20) eine Leseschnittstelle (4) umfasst und derart ausgestaltet ist, dass sie Daten (6), welche in einem dem Fahrzeug (10) zugeordneten Schlüssel (1) gespeichert sind, mittels der Leseschnittstelle (4) ausliest, und
wobei die Datenlesevorrichtung (20) darüber hinaus derart ausgestaltet ist, dass sie eine Software mindestens eines Steuergeräts (2; 3) des Fahrzeugs **dadurch** erweitert, dass sie die von dem Schlüssel (1) ausgelesenen Daten (6) an das mindestens eine Steuergerät (2; 3) überträgt.

10. Datenlesevorrichtung nach Anspruch 9, **dadurch gekennzeichnet, dass** die Datenlesevorrichtung (20) zur Durchführung des Verfahrens nach einem der Ansprüche 1-8 ausgestaltet ist.

11. Fahrzeug (10) mit einer Datenlesevorrichtung (20) nach Anspruch 9 oder 10.

12. Schlüssel (1) für ein Fahrzeug,
mit einem Datenspeicher (7), und
mit einer Sendeeinheit (8) zum Übertragen von in dem Datenspeicher (7) gespeicherten Daten (6) an eine Datenlesevorrichtung (20) des Fahrzeugs (10) nach Anspruch 9 oder Anspruch 10.

13. Schlüssel (1) nach Anspruch 12, **dadurch gekennzeichnet, dass** der Schlüssel (1) zur Durchführung des Verfahrens nach einem der Ansprüche 1-8 ausgestaltet ist.
